# EUROPEAN PATENT APPLICATION

(11) **EP 1 939 709 A1**
(43) Date of publication of application: **02.07.2008**
(21) Application number: 06256550.2
(22) Date of filing: 22.12.2006
(51) Int. Cl.: G06F 1/16

(54) **Space-saving display device**

(71) Applicant: Hannspree, Inc., Taipei City (TW)
(72) Inventor: Huang, Wen-Hung, Tucheng City Taipei 236 (TW); Hsieh, Kuan-Cheng, Jhongshan District Keelung City 203 (TW)
(74) Representative: Tranter, Andrew David

(57) **Abstract**

A space-saving display device is disclosed to include a display body provided with a first pivot member, a base formed of an frame and provided with a second pivot member, and a support formed of a connecting member having a middle bend and two coupling members provided at two ends of the connecting member and respectively pivotally coupled to the first pivot member and the second pivot member such that the display body, the support and the base can be folded together to have the connecting member with its bend be received in the inner open space within the base to minimize the size convenient for storage, packing and delivery.

## Description

### BACKGROUND OF THE INVENTION

### 1. Field of the Invention

The present invention relates to a flat panel display and more specifically, to a space-saving display device that can be folded in a flat manner to reduce space occupation.

### 2. Description of Related Art

A conventional CRT (Cathode Ray Tube) display is bulky and heavy, and tends to emit radiant rays that are harmful to human body. Due to these existing drawbacks, CRT displays are rapidly being weeded out of the market, and people may choose a flat panel display, for example, a LCD (Liquid Crystal Display) to substitute for a conventional CRT display. Following continuous improvement in display fabrication technology and mass production of LCDs, flat panel displays, mainly, LCDs have become the market main stream.

A LCD utilizes two sheets of polarizing material with a liquid crystal material between them. When a predetermined voltage is applied to the liquid crystal material, the liquid crystal molecules are aligned to block the light, and therefore each liquid crystal works as a shutter to switch light on or off.

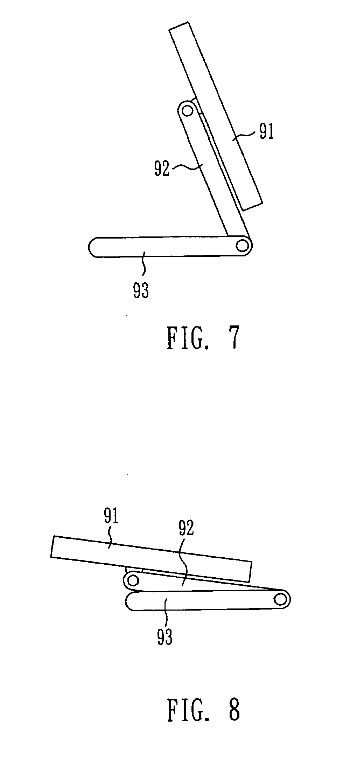

FIG. 7 is a side view showing an extended state of a LCD device according to the prior art. According to this design, the LCD device comprises a display body **91**, a base **93**, and a rack **92** coupled between the base **93** and the backside of the display body **91**. The base **93** and the backside of the display body **91** are respectively provided with a pivot member (not shown). The rack **92** has its top and bottom sides mounted with a respective coupling member (not shown). The two coupling members of the rack **92** are respectively pivotally coupled to the pivot member at the base **93** and the pivot member at the backside of the display body **91.** This design allows the user to adjust the angle of inclination of the display body **91** conveniently with the hand so as to obtain an optimal view angle.

When the aforesaid conventional LCD device is collapsed, as shown in FIG. 8, the display body **91,** the rack **92** and the base **93** are stacked on one another. Because the rack **92** and the base **93** each have a certain thickness, the collapsed LCD device still has a certain height, not economic and convenient for storing, packing and delivering. Therefore, conventional design of LCD device is still not satisfactory in function, and there is room for improvement.

Therefore, it is desirable to provide a display device that saves storage space.

### SUMMARY OF THE INVENTION

The present invention has been accomplished under the circumstances in view. According to the present invention, the space-saving display device is comprised of a display body, a base, and a support. The display body has a first pivot member at the backside. The base comprises an open frame and a second pivot member mounted on the open frame. The open frame defines an inner open space. The support comprises a connecting member, a first coupling member provided at one end of the connecting member and pivotally coupled to the first pivot member of the display body, and a second coupling member provided at the other end of the connecting member and pivotally coupled to the second pivot member of the base. The connecting member of the support has a bend connected between the first coupling member and the second coupling member and curved toward the inner open space of the base such that when the support and the base are folded together by folding the second coupling member and the second pivot member, the connecting member is received in the inner open space within the base. Therefore, when the stand of the space-saving display device is collapsed, the height and volume of the space-saving display device are greatly reduced to facilitate storage, packing, and delivery.

Further, the second coupling member of the support is covered with a cover. The cover is made out of flexible rubber or the like so that the user can hold the support positively with the hand to adjust the relative angle between the support and the base.

Further, the cover of the support has a handhold portion at the outer surface. The handhold portion has at least one recess fitting the shape of the hand or fingers of the user, and an anti-skid device comprised of a plurality of raised portions for grasping of the user's hand.

Further, the frame has a plurality of raised portions protruded from a bottom side thereof. The frame can be made out of flexible rubber or metal. Further, the frame can be a circular frame, triangular frame, or rectangular frame that can positively be positioned on a flat surface to support the space-saving display device steadily and to receive the connecting member of the support when the space-saving display device is collapsed.

Further, the first pivot member of the display body is comprised of two coaxial pivot members symmetrically mounted on the backside of the display body to bear the pressure evenly, facilitating adjustment of the relative angle between the display body and the support.

Further, the connecting member has an opening. When the space-saving display device is collapsed, the user can insert the hand through the opening of the connecting member to hold the display body.

Further, the display body can be a flat panel display. The flat panel display can be a LCD panel, plasma display panel, OLED display panel, or any of other equivalent flat display panels.

### BRIEF DESCRIPTION OF THE DRAWINGS

FIG. 1 is an exploded view of a space-saving display device in accordance with a first embodiment of the present invention.
FIG. 2 is an elevational view of the space-saving display device in accordance with the first embodiment of the present invention.
FIG. 3 is an oblique elevation showing the collapsed state of the space-saving display device in accordance with the first embodiment of the present invention.
FIG. 4 is a sectional side view of a part of the space-saving display device in accordance with the first embodiment of the present invention, showing the support received in the base.
FIG. 5 is an elevational view of a space-saving display device in accordance with a second embodiment of the present invention.
FIG. 6 is an elevational view of a space-saving display device in accordance with a third embodiment of the present invention.
FIG. 7 is a side view showing an extended state of a LCD device according to the prior art.
FIG. 8 is a side view showing the collapsed state of the prior art LCD device.

### DETAILED DESCRIPTION OF THE PREFERRED EMBODIMENT

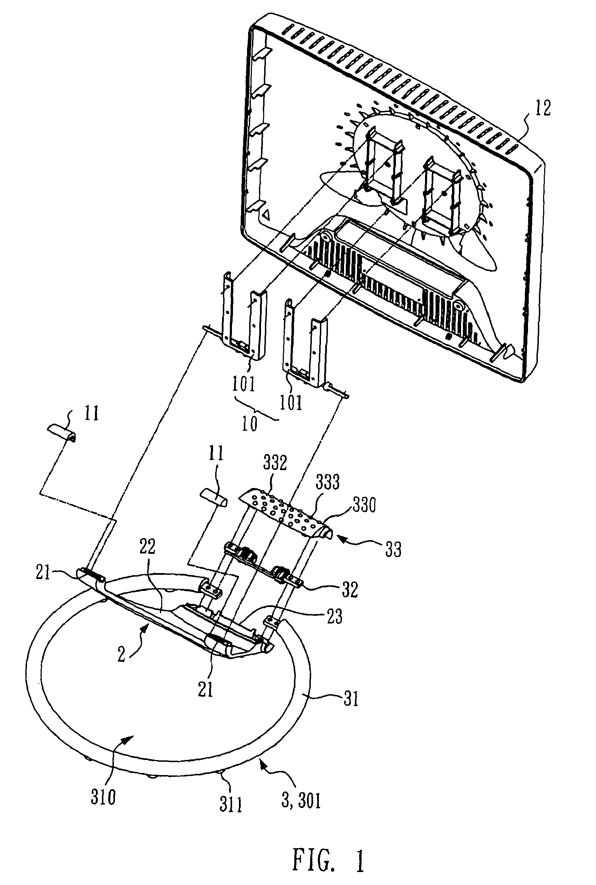

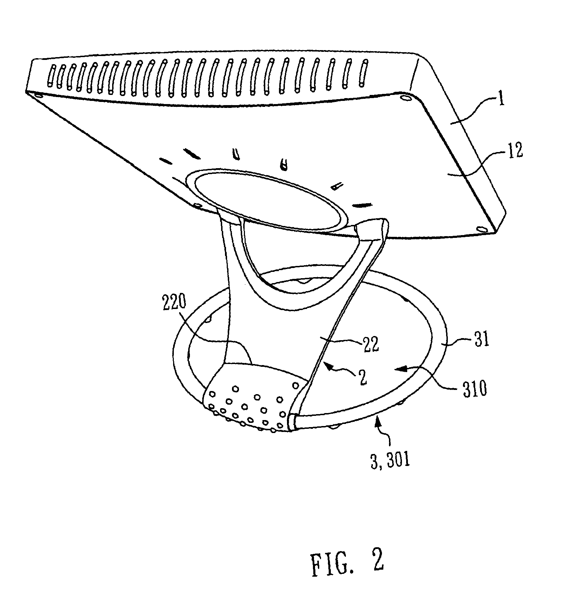

Referring to FIGS. 1 and 2, a space-saving display device in accordance with a first embodiment of the present invention is shown comprised of a display body **1,** a base **3,** and a support **2.** The backside of the display body **1** comprises a first pivot member **10** and a back cover **12** (see FIG. 2). The first pivot member **10** is comprised of two coaxial pivot members **101** symmetrically fixing at the backside of the display body **1.** The back cover **12** is provided at the outer side of the first pivot member **10.**

Further, as shown in FIG. 1, the base **3** comprises a frame **31** and a second pivot member **32.** The second pivot member **32** is coupled to the frame **31.** The frame **31** has a plurality of raised portions **311** protruded from the bottom side, and defines an inner open space **310.** The frame **31** can be a metal frame or rubber frame. The raised portions **311** allow positioning of the base **3** to a flat surface to support the display body **1** steadily. According to this embodiment, the base **3** is a circular member **301** for supporting the display body **1** steadily.

Further, as shown in FIG. 1, the support **2** is comprised of a connecting member **22.** The connecting member **22** has a first coupling member **21** and a second coupling member **23** respectively disposed at the two ends. The first coupling member **21** and the second coupling member **23** are respectively coupled to the first pivot member **10** at the back cover **12** and the second pivot member **32** at the base **3.** Further, as shown in FIG. 2, the connecting member **22** of the support **2** further has a bend **220** connected between the first coupling member **21** and the second coupling member **23,** and curving in direction toward the inner open space **310** of the base **3.**

Further, as shown in FIG. 1, the first coupling member **21** of the support **2** are covered with a respective ornamental covering **11,** and the second coupling member **23** of the support **2** are covered with a cover **33**. The cover **33** has a handhold portion **330** on the outer surface. The handhold portion **330** has anti-skip device **332.** According to this embodiment, the handhold portion **330** is a flexible rubber handhold portion **330,** and the anti-skip device **332** is comprised of a plurality of raised portions **333** for the grasping of the user's hand so that the user can impart a force to bias the support **2** to adjust the relative angle between the support **2** and the base **3.**

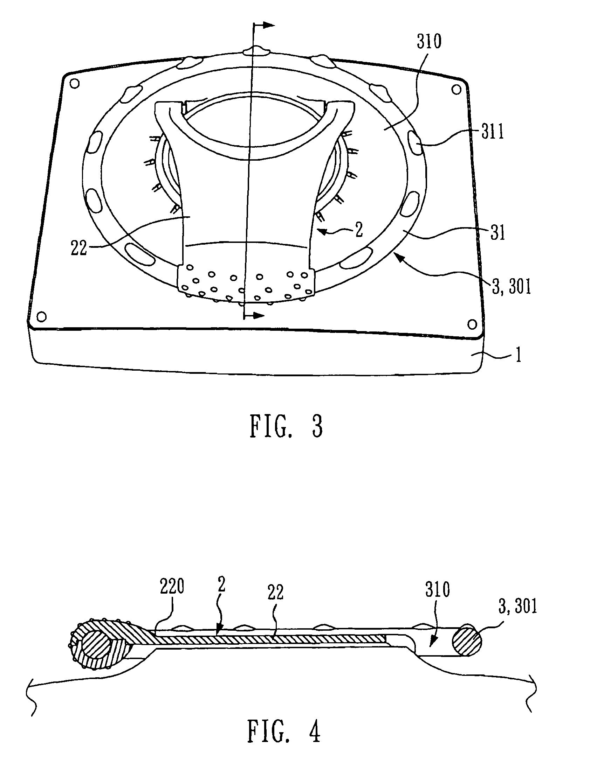

Referring to FIG. 3 and FIG. 1 again, the display body **1** and the support **2** can be biased relative to each other and received together by means of the first pivot member **10** and the first coupling member **21;** the support **2** and the base **3** can be biased relative to each other and folded together by folding the second pivot portions **23** and the second pivot member **32**. When the display body **1,** the support **2** and the base **3** are received together, as shown in FIG. 3, the connecting member **22** of the support **2** is received in the inner open space **310** within the base **3**.

Referring to FIG. 4 and FIG. 1 again, when the base **3** of space-saving display device is collapsed, the connecting member **22** of the support **2** and its bend **220** are folded in the inner open space **310** within the base **3**, thereby greatly reducing the height and volume of the space-saving display device to facilitate storage, packing, and delivery of the space-saving display device.

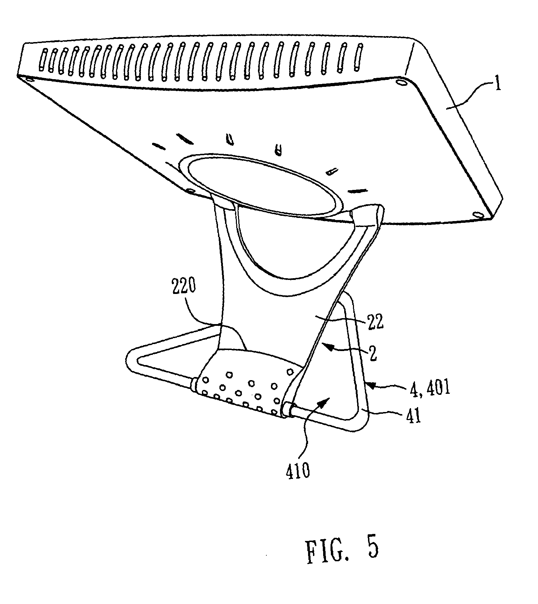

FIG. 5 shows a space-saving display device in accordance with a second embodiment. This second embodiment is substantially similar to the aforesaid first embodiment with the exception that the base **4** according to this second embodiment is comprised of a triangular frame **401**. When the support **2** and the base **4** are folded together, the connecting member **22** of the support **2** and its bend **220** are received in the inner open space **410** defined within the base **4.** Therefore, this second embodiment achieves the same benefits as the aforesaid first embodiment, i.e., the base **4** does not slip, the user can hold and bias the support **2** positively with the hand to adjust the relative angle between the support **2** and the base **4,** and the collapsed state of the space-saving display device has a minimal height and volume to facilitate storage, packing and delivery.

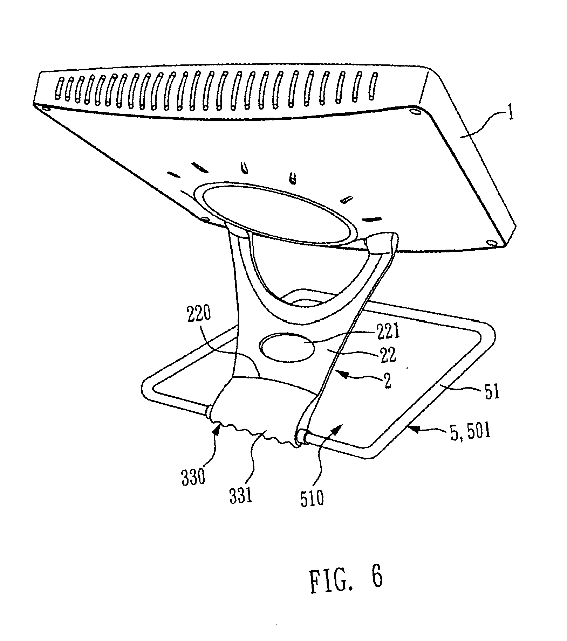

FIG. 6 shows a space-saving display device in accordance with a third embodiment. This third embodiment is substantially similar to the aforesaid first embodiment with the exception that the base **5** according to this third embodiment is formed of a rectangular frame **501;** the connecting member **22** of the support **2** has an opening **221;** the handhold portion **330** of the cover **33** has at least one recess **331.** When the support **2** and the base **5** are folded together, the user can insert the hand through the opening **221** to hold the display body **1**. The recess **331** curved inwards to fit the hand or fingers of the user so that the user can hold the handhold portion **330** of the cover **33** with the hand positively when adjusting the relative angle between the support **2** and the base **5.** When the space-saving display device is collapsed, the connecting member **22** of the support **2** and its bend **220** are received in the inner open space **510** defined within the base **5.** Therefore, this third embodiment achieves the same benefits as the aforesaid first embodiment, i.e., the base **5** does not slip, the user can hold and bias the support **2** positively with the hand to adjust the relative angle between the support **2** and the base **5,** and the collapsed state of the space-saving display device has a minimal height and volume to facilitate storage, packing and delivery.

Although the present invention has been explained in relation to its preferred embodiments, it is to be understood that many other possible modifications and variations can be made without departing from the spirit and scope of the invention as hereinafter claimed.

## Claims

1. A space-saving display device comprising:
a display body, having a first pivot member at a backside thereof;
a base, comprising a frame and a second pivot member mounted on said frame, said frame defining an inner open space; and
a support, comprising a connecting member, a first coupling member provided at a first end of said connecting member and pivotally coupled to said first pivot member of said display body, and a second coupling member provided at a second end of said connecting member and pivotally coupled to said second pivot member of said base;
wherein said connecting member of said support has a bend connected between said first coupling member and said second coupling member and curved toward the inner open space of said base such that when said support and said base are folded together by folding said second coupling member and said second pivot member, said connecting member is received in said inner open space within said base.

2. The space-saving display device as claimed in claim 1, wherein said second coupling member is covered with a cover that has a handhold portion at an outer surface thereof.

3. The space-saving display device as claimed in claim 2, wherein said handhold portion has at least one recess.

4. The space-saving display device as claimed in claim 2, wherein said handhold portion has an anti-skid device.

5. The space-saving display device as claimed in claim 4, wherein said anti-skid device is comprised of a plurality of raised portions.

6. The space-saving display device as claimed in claim 2, wherein said cover is a rubber cover.

7. The space-saving display device as claimed in claim 1, wherein said frame has a plurality of raised portions protruded from a bottom side thereof.

8. The space-saving display device as claimed in claim 1, wherein said frame is a rubber frame.

9. The space-saving display device as claimed in claim 1, wherein said frame is a metal frame.

10. The space-saving display device as claimed in claim 1, wherein said frame is a circular frame.

11. The space-saving display device as claimed in claim 1, wherein said frame is a triangular frame.

12. The space-saving display device as claimed in claim 1, wherein said frame is a rectangular frame.

13. The space-saving display device as claimed in claim 1, wherein said connecting member has an opening.
